(19) Europäisches Patentamt
European Patent Office
Office européen des brevets

(11) Veröffentlichungsnummer: **0 205 745**
**B1**

# (12) EUROPÄISCHE PATENTSCHRIFT

(45) Veröffentlichungstag der Patentschrift: **21.06.89**

(51) Int. Cl.⁴: **B 01 D 53/34,** B 01 D 47/06

(21) Anmeldenummer: **86102310.9**

(22) Anmeldetag: **22.02.86**

## (54) Vorrichtung zum Waschen von Abgasen.

(30) Priorität: **07.03.85 DE 3508087**

(43) Veröffentlichungstag der Anmeldung: **30.12.86 Patentblatt 86/52**

(45) Bekanntmachung des Hinweises auf die Patenterteilung: **21.06.89 Patentblatt 89/25**

(84) Benannte Vertragsstaaten: **BE FR GB IT LU NL SE**

(56) Entgegenhaltungen:
**DE-A-1 931 488**
**DE-A-2 842 244**
**US-A-3 841 060**

(73) Patentinhaber: **Müllverbrennungsanlage Wuppertal GmbH, Korzert 15, D-5600 Wuppertal 12 (DE)**

(72) Erfinder: **Temelli, Sedat, Dipl.- Ing., Lessingstrasse 6, D-4006 Erkrath 2 (DE)**

(74) Vertreter: **Patentanwälte Dr. Solf & Zapf, Schlossbleiche 20 Postfach 13 01 13, D-5600 Wuppertal 1 (DE)**

**EP 0 205 745 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Die vorliegende Erfindung betrifft eine Vorrichtung zum Waschen von Abgasen, insbesondere Rauchgasen von Müllverbrennungsanlagen, bestehend aus einem Gehäuse mit Gehäusewänden, einer Eintrittsöffnung, einer Austrittsöffnung, sowie mit dem Gehäuse verbundenen Düsen zum Versprühen von Waschwasser in den Gehäuseinnenraum, wobei die Gehäusewände und die Düsen aus korrosionsbeständigen Materialien bestehen.

Derartige Waschvorrichtungen werden als sogenannte Sättiger in den bekannten Rauchgaswaschanlagen verwendet. In diesen Sättigern werden durch Eindüsen von Waschwasser die eingeleiteten Rauchgase auf ca. 60°C abgekühlt. Diese Sättiger unterliegen einer starken Korrosion aufgrund der Säurebeanspruchung und zusätzlicher Lochfraßkorrosion durch Chloride und Fluoride sowie von Tropfenschlagerosion durch die Düsenwassertropfen. Aus diesen Gründen werden bekannte Sättigerkästen aus hochwertigen Stählen, insbesondere korrosionsbeständigen Nickel-Legierungen, wie sie z. B. unter dem eingetragenen Warenzeichen "Hastelloy" bekannt sind, hergestellt. Jedoch auch die Verwendung derartiger Materialien führt nicht zu wünschenswerten betriebswirtschaftlichen Benutzungszeiten. Zudem treten bei den bekannten Sättigern starke Korrosionen am Eintrittskanal des Sättigers auf.

Der vorliegenden Erfindung liegt nun die Aufgabe zugrunde, eine Waschvorrichtung zu schaffen, die eine hohe Lebensdauer besitzt und bei der Verschleißerscheinungen durch Korrosion und Erosion, insbesondere durch Säurebeanspruchung und Tropfenschlagerosion, weitgehend reduziert werden.

Erfindungsgemäß wird dies dadurch erreicht, daß die Gehäusewände aus einem flexiblen, säurefesten Material bestehen und daß die Düsen von in die flexiblen Wände eingesetzten Keramikeinsätzen gebildet sind. Indem erfindungsgemäß auf die Verwendung von Stahl als Herstellungsmaterial für die Waschvorrichtung verzichtet wird, werden die bekannten Korrosions- und Erosionsprobleme derart reduziert, daß eine wesentlich verlängerte Lebensdauer der erfindungsgemäßen Vorrichtung erreicht wird. Zudem wird überraschenderweise noch der zusätzliche Effekt erreicht, daß die Gehäusewände aufgrund ihrer flexiblen Ausgestaltung infolge des im Rauchgaskanals herrschenden Unterdrucks nach innen gezogen werden. Hierdurch wird eine Verengung des Strömungsquerschnittes innerhalb der erfindungsgemäßen Waschvorrichtung erreicht, so daß eine Art Venturi-Kanal geschaffen wird, was zu einer verbesserten Durchmischung zwischen Rauchgas und eingesprühtem Waschwasser führt. Hierdurch werden die Ab- bzw. Rauchgase nicht nur auf die Sättigungstemperatur abgekühlt, sondern es erfolgt auch die Auswaschung von Chlorwasserstoff, Schwefeldioxid und Fluorwasserstoff. Erfindungsgemäß ist es insbesondere von Vorteil, wenn die Düsen zum Einspritzen des Waschwassers unterhalb des engsten Querschnitts angeordnet sind. Denn hier erfährt das Rauchgas-Tropfengemisch infolge der Verengung zunächst eine Beschleunigung und erwirkt dadurch einen Impulsaustausch. Diese Relativbewegungen ermöglichen bei geringen Druckverlusten eine optimale Vermischung des Wassers mit dem Rauchgas.

Weitere vorteilhafte Ausbildungen der Erfindung sind in den Unteransprüchen enthalten.

Aus der US-A-3 841 060 ist eine Gas-Waschvorrichtung bekannt, die aus einem Wäscherturm mit einem Gehäuse mit einer oberen Öffnung, einer unteren Öffnung und einer seitlichen Abgaseintrittsöffnung besteht. Dabei weist das Gehäuse jedoch starre Gehäusewände auf, obgleich innerhalb des Gehäuses Auskleidungen aus einem elastischen, flexiblen Material, z. B. Gummi, an den Gehäusewänden befestigt sind. Diese Auskleidungen können jedoch keinesfalls als Wandungen bezeichnet werden, da sie einerseits nur in Teilbereichen der eigentlichen, starren Gehäusewände angeordnet sind, und da sie andererseits eine Vielzahl von Öffnungen bzw. Löchern aufweisen. Aufgrund dieser Löcher sind die Auskleidungen folglich nur dann als dicht zu bezeichnen, wenn - wie dies in dieser Druckschrift ausgeführt ist - ein Druckmedium, z. B. Luft, in den Zwischenraum zwischen den Gehäusewänden und den Auskleidungen eingeführt wird, da in diesem Fall dieses Druckmedium dann in Richtung des Gehäuseinnenraums durch die Löcher strömt. Sollte jedoch die Einrichtung zur Druckmittel-Zufuhr aus irgendeinem Grund, wie z. B. bei einer Störung, einmal ausfallen, können natürlich aggressive Stoffe ohne weiteres durch die Löcher an die Gehäusewände gelangen, so daß die Auskleidungen folglich keinen sicheren Schutz gegen Korrosion oder Erosion der Außenwände darstellen, zumal sie ohnehin nur in Teilbereichen der Wände angeordnet sind.

Weiterhin besitzt die bekannte Vorrichtung aber auch keine mit dem Gehäuse verbundenen Düsen wie die gattungsgemäße Vorrichtung, sondern im oberen Bereich des Gehäuseinnenraums sind ringförmige Sprühköpfe angeordnet, wobei jeder Sprühkopf aus einem ringförmigen Rohrstück besteht und eine Vielzahl von radial nach außen gerichteten Öffnungen bzw. Löchern aufweist. Dabei können zwar die Löcher prinzipiell als Düsen bezeichnet werden, jedoch sind erstens in der Druckschrift keinerlei Angaben bezüglich des Materials der Sprühköpfe enthalten, so daß natürlich auch die Düsen bzw. Öffnungen selbst hinsichtlich ihres Materials nicht definiert sind, und zweitens sind die Löcher hier weder einzelne, mit dem Gehäuse verbundene Düsen, noch Einsätze in den Gehäusewänden. Darüber hinaus wird aber auch an keiner Stelle der Entgegenhaltung die Verwendung von Keramikmaterial nahegelegt. Bei der bekannten Vorrichtung dürften somit - ebenfalls wie bei den eingangs beschriebenen sogenannten Sättigern - Korrosionen und Erosionen im Bereich der Gehäusewände sowie der Düsen bzw. der Sprühköpfe auftreten. Außerdem ist die bekannte Vorrichtung aufgrund der inneren, an den Wänden befestigten Auskleidungen sowie aufgrund der ringförmigen Sprühköpfe konstruktiv aufwendig und folglich teuer. Bei dem Gegenstand dieser Druckschrift wird zwar ebenfalls wie bei der erfindungsgemäßen Vorrichtung eine Verengung des Strömungsquerschnittes erreicht, jedoch nur dann, wenn die obere Auskleidung mit Druck von außen beaufschlagt wird, da ja allein ein in dem Gehäuseinnenraum herrschender Unterdruck durch die Löcher der Auskleidung hindurch auch in dem Zwischenraum zwischen der Auskleidung und den Gehäusewänden vorhanden wäre. Außerdem wird die beschriebene Verengung nur im Bereich zwischen zwei Sprühköpfen erreicht, d. h. eine Anordnung von Düsen genau im Bereich der Verengung bzw. direkt unterhalb des engsten Querschnittes der Verengung ist hier nicht, oder nur durch einen zusätzlichen, ringförmigen Sprühkopf möglich, wobei jedoch die Befestigung dieses zusätzlichen Sprühkopfes nicht an den starren Gehäusewänden erfolgen könnte und somit zusätzliche Halterungen erforderlich wären, was aber zu einer weiteren Verteuerung der Vorrichtung führen würde. Zudem hätten der Sprühkopf und seine Halterungen aufgrund ihrer Anordnung im Bereich der Verengung einen ungünstigen Einfluß auf die Rauchgasströmung und wären ebenfalls korrosions- und erosionsgefährdet.

Die erfindungsgemäße Waschvorrichtung läßt sich mit Vorteil in einer Rauchgas-Waschanlage verwenden, denn durch die Verwendung der erfindungsgemäßen Waschvorrichtung ist es möglich, ein sogenanntes Kreislsufverfahren durchzuführen, bei dem das Abwasser der erfindungsgemäpen Waschvorrichtung im Kreislauf in diese Waschvorrichtung zurückgeleitet wird. Durch dieses erfindungsgemäße Kreislaufverfahren werden der Frischwasserbedarf und die Abwassermenge erheblich reduziert. Zusätzlich wird durch das Kreislaufverfahren eine optimale Ausfällung der Schwermetalle und Schwermetallverbindungen in einem Auffangbecken erzielt. Weiterhin kann erfindungsgemäß zur Anhebung des pH-Wertes elne Zugabe von Kalksteinmehl erfolgen, und zwar in das rückgeführte Waschwasser. Hierdurch kann zusätzlich $SO_2$ absorbiert werden.

Anhand der in den beiliegenden Zeichnungen dargestellten Ausführungsbeispiele wird die Erfindung näher erläutert. Es zeigen:

- Fig. 1 eine Seitenansicht einer erfindungsgemäßen Waschvorrichtung, im Prinzip,
- Fig. 2 einen Schnitt entlang der Schnittlinie II - II in Fig. 1,
- Fig. 3 einen Schnitt durch die Wand einer erfindungsgemäßen Vorrichtung außer Betrieb in der linken Hälfte und in der rechten Hälfte eine Ansicht einer Wand der erfindungsgemäßen Vorrichtung bei Betrieb,
- Fig. 4 einen Teilschnitt in vergrößertem Maßstab durch die Wand einer erfindungsgemäßen Vorrichtung,
- Fig. 5 einen Schnitt durch eine weitere Ausgestaltung einer erfindungsgemäßen Vorrichtung, und
- Fig. 6 ein Prinzipschaltbild einer nach dem Kreislaufprinzip arbeitenden erfindungsgemäßen Rauchgaswaschanlage.

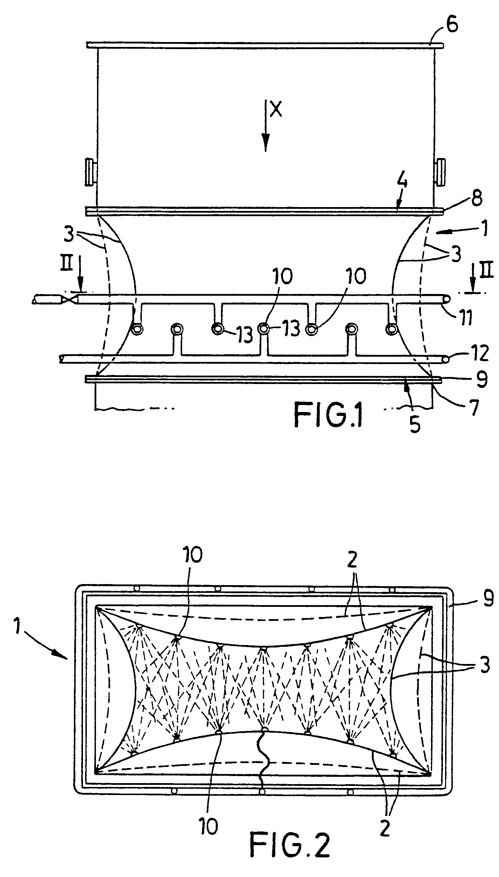

In Fig. 1 ist eine erfindungsgemäße Waschvorrichtung gezeigt. Diese besteht aus einem Gehäuse 1, dessen wände 2, 3 aus flexiblem, säurefestem Material bestehen. Im dargestellten Ausführungsbeispiel weist das Gehäuse einen im wesentlichen rechteckigen Querschnitt mit den Längswänden 2 und den Querwänden 3 auf. Das Gehäuse 1 weist eine obere Eintrittsöffnung 4 und eine untere Austrittsöffnung 5 auf. Auf der Eintrittsöffnung 4 sitzt ein Rauchgaseinleitungsstutzen 6 und auf der Austrittsöffnung 5 ist ein Austrittsstutzen 7 angeordnet. Durch den Pfeil X wird die Strömungsrichtung eines Rauchgases bzw. eines Abgases angegeben. Die Längs- und Querwände 2, 3 sind jeweils an ihrer Ober- und Unterseite in einem Rahmen 8, 9 befestigt. In den Längswänden 2 der erfindungsgemäßen Waschvorrichtung sind Düsen 10 eingesetzt. Diese Düsen 10 bestehen aus einem säurefesten Keramikmaterial, beispielsweise Porzellan. Die Düsen 10 sind über Leitungen 11, 12 mit einer Wasserversorgung verbunden.

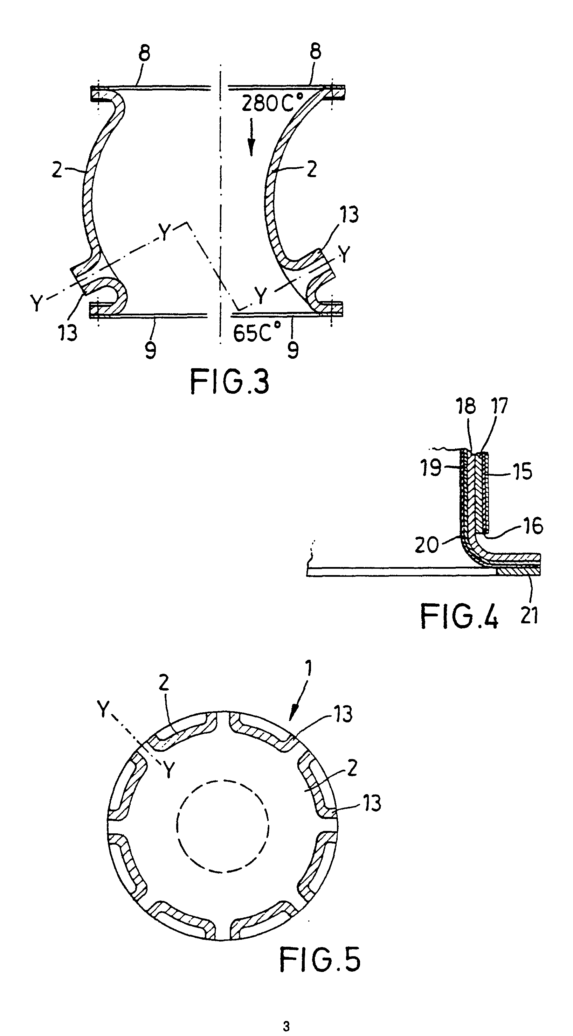

In den Fig. 1 und 2 ist durch den gestrichelten Verlauf der Wände 2, 3 deren Zustand während des Stillstandes der Anlage bezeichnet und der durchgezogene Strichverlauf deutet den Betriebszustand der erfindungsgemäßen Vorrichtung an. Der Nichtbetriebszustand und der Betriebszustand und der damit verbundene Verlauf der Wände der erfindungsgemäßen Vorrichtung ergibt sich insbesondere aus Fig. 3. Wie aus den Abbildungen zu erkennen ist, nehmen die flexiblen Wände in der Nichtbetriebsstellung, Fig. 3, linke Seite, eine Lage ein, die dadurch gekennzeichnet ist, daß die Wand mit leichter Ausbuchtung nach außen verläuft. Das bedeutet, daß die Wand mit geringem Übermaß gegenüber dem Abstand der beiden Rahmen 8, 9 ausgebildet ist, d. h. ihre Breite ist größer als der Abstand der beiden Rahmen 8, 9 . Weiterhin ist hieraus zu erkennen, daß an den Wänden jeweils im Anschlußbereich für die Düsen 10 Anschlußfortsätze 13 ausgebildet sind, in die die Düsen 10 eingesetzt werden und mittels üblicher Schlauchklemmen befestigt werden, die über die Anschlußfortsätze 13 geschoben werden. Eine besondere Abdichtung der Düsen an ihrem Umfange ist nicht erforderlich, da, wie im folgenden noch erläutert, innerhalb der erfindungsgemäßen Waschvorrichtung im Betriebszustand ein Unterdruck herrscht. Dieser Unterdruck entsteht durch den Anschluß eines Sauggebläses über den Austrittsstutzen, mit dem die Rauchgase über den Rauchgaseintritt angesaugt werden. Diese Rauchgase besitzen innerhalb des Rauchgaseintrittes ca. eine Temperatur von 280° C und werden in der erfindungsgemäßen Waschvorrichtung auf ca. 65° C abgekühlt und treten mit dieser Temperatur aus der erfindungsgemäßen Vorrichtung über den Austrittsstutzen aus. Durch den innerhalb der erfindungsgemäßen Vorrichtung entstehenden Unterdruck nehmen die Wände 2, 3 die in den Fig. 1 und 2 mit den durchgezogenen Linien eingezeichnete Lage ein, d. h. die Wände 2, 3 erfahren eine konkave Wölbung nach innen. Hierdurch wird eine Art Venturi-Kanal geschaffen. Der gewölbte Verlauf nach innen ist insbesondere auch aus Fig. 3, rechte Hälfte, zu erkennen. Durch diese Wölbung nach innen nehmen die Düsen 10 eine derartige Lage ein, daß ihre Einspritzachse Y - Y zur Strömungsachse der erfindungsgemäßen Vorrichtung schräg in Richtung auf die Austrittsöffnung verläuft. Wie insbesondere aus Fig. 3 zu erkennen ist, sind die Düsen erfindungsgemäß unterhalb des engsten Querschnitts der erfindungsgemäßen Vorrichtung im Betriebszustand, d.h. im nach innen gewölbten Zustand der Wände 2, 3, siehe Fig. 2, an den Seiten der Wände befestigt. In diesem Bereich erfährt das Rauchgastropfengemisch infolge der Verengung zunächst eine Beschleunigung und bewirkt dadurch einen Impulsaustausch. Die hierbei auftretenden Relativbewegungen ermöglichen bei geringen Druckverlusten eine optimale Vermischung des Wassers mit dem Rauchgas.

Wie aus Fig. 4 ersichtlich ist, besteht erfindungsgemäß das die flexiblen,säurebeständigen Wände bildende Material aus einem Schichtaufbau aus Glasgewebe und einem säurebeständigen Kunststoff, insbesondere Polytetrafluoräthylen. Dabei ergibt sich folgende Lagenfolge von außen nach innen. Zunächst ist außen eine Beschichtung 15 aus Polytretafluoräthylen auf einer Glasgewebelage 16 aufgebracht. An diese Glasgewebelage 16 schließt sich eine weitere Lage 17 aus Glasgewebe an, die von einer Lage 18 aus einer Polytetrafluoräthylen-Folie gefolgt wird, an die wiederum sich eine Lage 19 aus Glasgewebe anschließt, die an ihrer dem Vorrichtungsinnenraum zugekehrten Seite eine Beschichtung 20 aus Polytetrafluoräthylen aufweist. Die beiden Polytetrafluoräthylen-Beschichtungen 15, 20 besitzen vorzugsweise eine Dicke von 0,2 bis 0,5 mm und die einzelnen Gewebelagen 16, 17, 19 und die Polytetrafluoräthylen-Folie 18 weisen eine Dicke von ca. 0,8 bis 2 mm auf. Die Wände 2, 3 werden mit den Rahmen über eine Zwischenlage 21 aus sogenanntem Viton-Band befestigt, das sich durch eine hohe Temperaturbeständigkeit auszeichnet. Dieses Viton-Band besitzt eine Dicke von ca. 2 mm. Die Erfindung ist keineswegs auf den vorbeschriebenen Schichtaufbau beschränkt und auf die verwendeten Materialien, sondern umfaßt auch alle im Sinne der Erfindung gleichwirkenden Ausführungen, wobei es insbesondere auf eine hinreichende Flexibilität und Festigkeit sowie auf die erforderliche Säurebeständigkeit ankommt.

Weiterhin zeigt Fig. 5 eine weitere erfindungsgemäße Ausbildung einer Waschvorrichtung. Diese unterscheidet sich von der Vorbeschriebenen durch einen kreisförmigen Querschnitt, wobei im übrigen gleiche Teile mit denselben Bezugsziffern versehen sind.

Bei den herkömmlichen Rauchgaswaschanlagen gelangen die Rauchgase nach der Entstaubung zur Abscheidung von gasförmigen Schadstoffen in die Gaswaschanlage. In der am Wäschereintritt angeordneten Sättigerzone erfolgt durch Wassereindüsung und -verdampfung eine Abkühlung der Gase auf Sättigungstemperatur. In der nachgeschalteten Waschzone ist ein Zentrifugalwäscher als kombinierter Feststoffgasabscheider angeordnet. Am Austritt dieses Wäschers befinden sich ein Saugzug und ein Tropfenabscheider. Die Rauchgase werden mit dem gummierten Saugzug und durch ebenfalls gummierte Gaskanäle zum Tropfenabscheider und von dort über die Mischkammern des Schornsteines in die Atmosphäre abgeleitet. Die im Rauchgas enthaltenen Schadstoffe werden durch den Waschprozeß aus der Gasphase in die Flüssigkeitsphase überführt. Die Waschflüssigkeit ist stark sauer und besitzt beispielsweise einen pH-Wert von 1. Eine beträchtliche Teilmenge von ca. 80 % der in den Wäschern umlaufenden Lösung wird über eine Neutralisationsanlage in ein Absatzbecken geleitet. Die aus dem Absatzbecken ablaufende Flüssigkeit wird in der Regel in Flüsse abgeführt. Hierdurch tritt jedoch einen erhebliche Umweltbelastung auf.

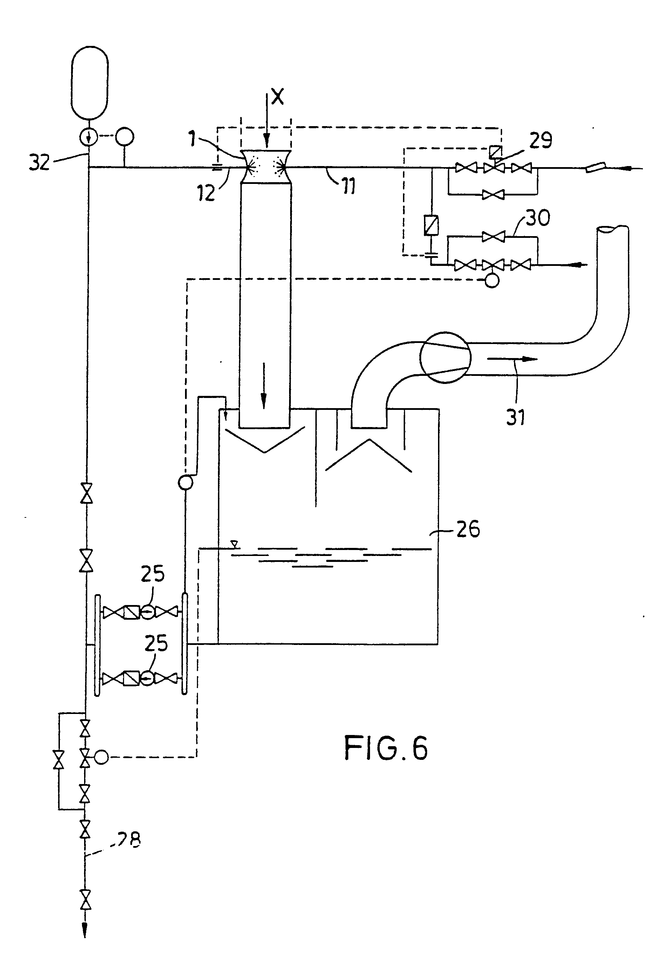

Durch die erfindungsgemäße Verwendung der Waschvorrichtung, wie in den Fig. 1 bis 5 beschrieben, kann erfindungsgemäß ein sogenanntes Kreislaufverfahren vorgesehen werden. Dieses Kreislaufverfahren verläuft wie folgt (siehe Fig. 6). Die Abgase mit einer Temperatur von ca. 280° C werden in die erfindungsgemäße Waschvorrichtung eingeleitet, wobei die im Rauchgas enthaltenen Schadstoffe aus der Gasphase in die Flüssigkeitsphase überführt werden. Hierdurch kommt es zu einer Anreicherung dieser Schadstoffe im Waschmedium, dem Waschwasser. Dieses Waschwasser wird nun nach dem Austritt aus der erfindungsgemäßen Waschvorrichtung sofort wieder über Kreislaufpumpen 25 der erfindungsgemäßen Waschvorrichtung zugeführt. Hierzu dient die in Fig. 1 eingezeichnete untere Zuleitung 12.

Weiterhin ist erfindungsgemäß vorgesehen, daß zur Einhaltung einer bestimmten Grenzkonzentration, die mit einem Leitfähigkeitsmesser gemessen wird, eine bestimmte Wassermenge über eine Leitung 28 abgezogen und neutralisiert wird. Dieses Verlustwasser und das Verlustwasser durch Verdampfung und Absalzung wird in Form von Frischwasser durch Eindüsung, in Fig. 1 über die Zuleitung 11, laufend ergänzt. Die Zuleitung 11 wird aus dem Wassernetz versorgt, wobei eine Notwasserzuleitung 29 und eine Zusatzwasserversorgung 30 vorgesehen ist.

Bei dem erfindungsgemäßen Verfahren wirkt demnach die erfindungsgemäße Waschvorrichtung sowohl als Sättiger als auch als Wäscher, so daß bei den bekannten Verfahren vorhandene Zentrifugalwäscher entfallen können. Hierdurch wird eine wesentliche Kostenreduzierung erreicht. Darüber hinaus ergibt sich eine wesentliche Ersparnis am Frischwasser sowie eine erhebliche Verringerung der Abwassermenge entsprechend. Es waren beispielsweise 48 $m^3$ pro Stunde Frischwasser bei den bekannten Verfahren erforderlich, es werden erfindungsgemäß nur noch 18 $m^3$ pro Stunde Frischwasser benötigt. Die anfallende Abwassermenge reduziert sich von 36 $m^3$ pro Stunde Abwasser beim bekannten Verfahren auf 8 $m^3$ pro Stunde Abwasser gemäß dem erfindungsgemäßen Verfahren. Durch das erfindungsgemäße Kreislaufverfahren wird eine optimale Ausfällung in bezug auf Schwermetalle und Schwermetallverbindungen in einem Auffangbecken 26 des Wassers erzielt, was sich durch die wesentlich verringerte Abwassermenge ergibt. Der im Auffangbecken 26 vorhandene Wasserdampf wird über eine Leitung 31 zu einem Wasseraustauscher abgeführt. Zusätzlich kann vorteilhafterweise einen $SO_2$-Abscheidung erfolgen durch Lösung der Gaskomponente in einer wässrigen Phase. Da die Waschflüssigkeit in bekannten Systemen stark sauer ist, kann eine $SO_2$-Abscheidung nicht erfolgen. Um eine Abscheidung zu erreichen, wird als Additive $CaDO_3$, (z. B. Kalksteinmehl als in einer Suspension gelöste Kalziumkomponente) in das Kreislaufwasser über einen Zugabeleitung 32 zugeführt. Durch diese Maßnahme wird ein etwas höhrer pH-Wert von 3 - 4 eingestellt. Die Kreislaufwassersuspension bindet das $SO_2$ des Rauchgases unter Bildung von Kalziumsulfit und Gips.

**Patentansprüche**

1. Vorrichtung zum Waschen von Abgasen, insbesondere Rauchgasen von Müllverbrennungsanlagen, bestehend aus einem Gehäuse (1) mit Gehäusewänden (2, 3), einer Eintrittsöffnung (4), einer Austrittsöffnung (5) sowie mit dem Gehäuse (1) verbundenen Düsen (10) zum Versprühen von Waschwasser in den Gehäuseinnenraum, wobei die Gehäusewände (2, 3) und die Düsen (10) aus korrosionsbeständigen Materialien bestehen, dadurch gekennzeichnet, daß die Gehäusewände (2, 3) aus einem flexiblen, säurefesten Material bestehen, und daß die Düsen (10) von in die flexiblen Wände (2, 3) eingesetzten Keramikeinsätzen gebildet sind.

2. Vorrichtung nach Anspruch 1, dadurch gekennzeichnet, daß die flexiblen Wände (2, 3) in einen die Eintritts- und Austrittsöffnung (4, 5) umschließenden Rahmen (8, 9) eingesetzt sind und die Breite der flexiblen Wände (2, 3) größer ist als der Abstand der Rahmen (8, 9).

3. Vorrichtung nach Anspruch 2, dadurch gekennzeichnet, daß die flexiblen Wände (2, 3) derart in dem Rahmen (8, 9) befestigt sind, daß die Wände im Betriebszustand eine nach innen gerichtete, konkave Wölbung einnehmen.

4. Vorrichtung nach Anspruch 3, dadurch gekennzeichnet, daß die Düsen (10) in Strömungsrichtung der Abgase gesehen, unterhalb des durch die konkave Wölbung erzeugten engsten Querschnittes des Gehäuses (1) angeordnet sind.

5. Vorrichtung nach Anspruch 4, dadurch gekennzeichnet, daß die Düsenachse bei konkav nach innen gewölbten Wänden (2, 3) schräg in Richtung auf die Austrittsöffnung (5) zur Längsachse des Gehäuses (1) verläuft.

6. Vorrichtung nach den Ansprüchen 1 bis 5, dadurch gekennzeichnet, daß das Wandmaterial aus einem kunststoffbeschichteten Glasgewebe besteht, wobei die Kunststoffbeschichtung vorzugsweise aus Polytetrafluoräthylen besteht.

7. Vorrichtung nach Anspruch 6, dadurch gekennzeichnet, daß die flexiblen Wände (2, 3) einen derartigen Schichtaufbau aus Glasgewebe und Kunststoffbeschichtung aufweisen, daß sich von außen nach innen folgender Aufbau ergibt: Polytetrafluoräthylen-Beschichtung (15), Glasgewebelage (16), Glasgewebelage (17), Polytetrafluoräthylen-Folie (18), Glasgewebelage (19) und Polytetrafluoräthylen-Beschichtung (20).

8. Vorrichtung nach den Ansprüchen 1 bis 7, dadurch gekennzeichnet, daß die Wände (2, 3) mit den Rahmen (8, 9) unter Zwischenlage aus hochwärmebeständigem Material verbunden sind.

9. Vorrichtung nach den Ansprüchen 1 bis 8, dadurch gekennzeichnet, daß das Gehäuse (1) einen rechteckigen Querschnitt besitzt.

10. Vorrichtung nach den Ansprüchen 1 bis 8, dadurch gekennzeichnet, daß das Gehäuse (1) einen kreisförmigen Querschnitt aufweist.

## Claims

1. Apparatus for scrubbing waste gases, in particular flue gases from refuse incinerators, consisting of a housing (1) with housing walls (2, 3), an inlet opening (4), an outlet opening (5) and nozzles (10) connected to the housing (1) for spraying scrubbing water into the interior of the housing, the housing walls (2, 3) and the nozzles (10) consisting of corrosionresistant materials, characterised in that the housing walls (2, 3) consist of a flexible, acid-resistant material and that the nozzles (10) are formed by ceramic inserts inserted in the flexible walls (2, 3).

2. Apparatus according to Claim 1, characterised in that the flexible walls (2, 3) are inserted in a frame (8, 9) surrounding the inlet and outlet opening (4, 5) and the width of the flexible walls (2, 3) is greater than the spacing of the frames (8, 9).

3. Apparatus according to Claim 2, characterised in that the flexible walls (2, 3) are so fastened in the frame (8,9) that in the operating state the walls assume an inwardly directed, concave curvature.

4. Apparatus according to Claim 3, characterised in that, seen in the direction of flow of the waste gases, the nozzles (10) are located below the narrowest cross-section of the housing (1) produced by the concave curvature.

5. Apparatus according to Claim 4, characterised in that, with walls (2, 3) curved inwards in a concave manner, the nozzle axis extends obliquely in the direction of the outlet opening (5) with respect to the longitudinal axis of the housing (1).

6. Apparatus according to Claims 1 to 5, characterised in that the wall material consists of a plastics-coated glass fabric, the plastics coating preferably consisting of polytetrafluoroethylene.

7. Apparatus according to claim 6, characterised in that the flexible walls (2, 3) have a laminated construction of glass fabric and synthetic coating such that the following construction results from the outside inwards: polytetrafluoroethylene-coating (15), glass fabric layer (16), glass fabric layer (17), polytetrafluoroethylene film (18), glass fabric layer (19) and polytetrafluoroethylene coating (20).

8. Apparatus according to Claims 1 to 7, characterised in that the walls (2, 3) are connected to the frames (8, 9) with the interposition of material which is highly heat-resistant.

9. Apparatus according to Claims 1 to 8, characterised in that the housing (1) has a rectangular cross-section.

10. Apparatus according to Claims 1 to 8, characterised in that the housing (1) has a circular cross-section.

## Revendications

1. Installation de lavage des gaz d'échappement, en particulier de gaz de fumée d'installations de combustion de déchets, consistant en un boîtier (1) comprenant des parois (2, 3), une ouverture d'admission (4), une ouverture d'évacuation (5), ainsi que des buses (10) connectées au boîtier (1) pour la répartition d'eau de lavage dans l'espace intérieur du boîtier, les parois (2, 3) et les buses (10) étant réalisées en une matière résistant à la corrosion, caractérisé en ce que les parois (2, 3) du boîtier sont réalisées en une matière flexible, résistant aux acides et que les buses (10) sont constituées par des inserts en céramique placés dans les parois flexibles (2, 3).

2. Installation selon la revendication 1, caractérisée en ce que les parois flexibles (2, 3) sont placées dans un cadre (8, 9) entourant les ouvertures d'admission et d'évacuation (4, 5) et que la largeur des parois flexibles (2, 3) est supérieure à la distance entre les cadres (8, 9).

3. Installation selon la revendication 2, caractérisée en ce que les parois flexibles (2, 3) sont fixées dans le cadre (8, 9) de manière telle que les parois adoptent une courbure concave dirigée vers l'intérieur lorsque l'installation fonctionne.

4. Installation selon la revendication 3, caractérisée en ce que les buses (10) sont disposées - vues dans la direction de circulation des gaz d'échappement - en-dessous de la section la plus réduite du boîtier (1) résultant de la courbure concave.

5. Installation selon la revendication 4, caractérisée en ce que, lorsque les parois (2, 3) ont subi courbure concave vers l'intérieur, l'axe des buses s'étend obliquement par rapport à l'axe longitudinale du boîtier (1) vers l'ouverture d'évacuation (5).

6. Installation selon les revendications 1 à 5, caractérisée en ce que le matériau des parois est un tissu en verre textile, recouvert d'une matière synthétique, le revêtement en matière synthétique étant de préférence de l'éthylène de polytétrafluore.

7. Installation selon la revendication 6, caractérisée en ce que les parois flexibles (2, 3) presentent une structure de couches de tissu de verre textile et de revêtements en matière synthétique telle qu'il en résulte, de l'extérieur vers l'intérieur, la composition suivante: revêtement en ploytétrafluoréthylène (15), couche de tissu en verre textile (16), couche de tissu en verre textile (17), feuille de polytétrafluoréthylène (18), couche de tissu en verre textile (19), et revêtement en polytétrafluorethylène (20).

8. Installation selon les revendications 1 à 7, caractérisée en ce que les parois (2, 3) sont reliées aux cadres (8, 9) en intercalant une couche intermédiaire en une matière à constante thermique élevée.

9. Installation selon les revendications 1 à 8,

caractérisée en ce que le boîtier (1) possède une section rectangulaire.

10. Installation selon les revendications 1 à 8, caractérisée en ce que le boîtier (1) possède une section circulaire.

6
X
4
8
3
1
3
II
II
10
10
11
13
13
12
9
7
5

FIG.1

10
2
9
1
3
10
2

FIG.2

8
8
280C°
2
2
13
Y
Y
Y
Y
13
9
65C°
9

FIG.3

18
17
19
15
16
20
21

FIG.4

1
2
Y
13
Y
2
13

FIG.5

X
1
29
32
12
11
30
31
26
25
25
28

FIG.6